# EUROPEAN PATENT SPECIFICATION

(11) **EP 3 360 768 B1**
(45) Date of publication and mention of the grant of the patent: **12.08.2020**
(21) Application number: 18155555.8
(22) Date of filing: 07.02.2018
(51) Int. Cl.: B62M 3/00, B62M 9/122

(54) **SHAFT ELEMENT OF A BICYCLE BOTTOM BRACKET, AS WELL AS CRANK ARM ASSEMBLY AND BOTTOM BRACKET ASSEMBLY COMPRISING SUCH A SHAFT ELEMENT**
WELLENELEMENT EINES FAHRRADTRETLAGERS, SOWIE KURBELARMANORDNUNG UND TRETLAGERANORDNUNG MIT SOLCH EINEM WELLENELEMENT
ÉLÉMENT D'ARBRE D'UN PÉDALIER DE BICYCLETTE, AINSI QUENSEMBLE DE BRAS DE MANIVELLE ET ENSEMBLE SUPPORT INFÉRIEUR COMPRENANT UN TEL ÉLÉMENT D'ARBRE

(30) Priority: 13.02.2017 IT 201700015699
(43) Date of publication of application: 15.08.2018
(73) Proprietor: Campagnolo S.r.l., 36100 Vicenza (VI) (IT)
(72) Inventor: MILANESIO, Marco, 36100 VICENZA (IT); BISARELLO, Filippo, 36030 Costabissara (VI) (IT)
(74) Representative: Porta & Consulenti Associati S.p.A.

(56) References cited:
- JP-A- 2010 222 002
- KR-B1- 100 863 208
- US-A- 5 924 336
- US-A1- 2008 236 293
- US-A1- 2009 145 262
- US-A1- 2011 011 201

## Description

The present invention relates to a bicycle bottom bracket assembly.

A bicycle bottom bracket essentially comprises a shaft, configured to be received in a suitable housing provided on a bicycle frame, and two crank arms - a right crank arm and a left crank arm, respectively - coupled with opposite end portions of the shaft.

Throughout the present description and in the subsequent claims, the following definitions apply:
- the term "shaft element" is used to indicate one of the portions which the shaft of the bottom bracket can consist of;
- the term "crank arm assembly" is used to indicate a shaft element and a crank arm coupled with one another;
- the term "bottom bracket assembly" is used to indicate two crank arm assemblies coupled with one another.

The coupling between the shaft elements and the respective crank arms and that between the two shaft elements must ensure the correct mutual angular positioning of the crank arms. In particular, it is important for the crank arms to be aligned with the greatest possible precision, so that the torque provided with pedaling is exploited in an optimal manner.

In the present description and in the subsequent claims, the crank arms of a bottom bracket of a bicycle are said to be aligned when their middle axes lie on a same plane passing through the rotation axis of the bottom bracket and are angularly offset by 180°.

From European patent application n° EP 1792818 to the same Applicant it is known to make a bottom bracket assembly having perfectly aligned crank arms by coupling together two crank arm assemblies each comprising a shaft element provided, at a first end portion thereof, with a front toothing of the Hirth type and, at an opposite end portion thereof, with a crank arm aligned with a tooth or a throat of said front toothing. Such a tooth or throat in practice acts as a reference element for obtaining both the correct angular positioning of the crank arm with respect to the shaft element in the assembling step of the two crank arm assemblies and the correct mutual angular positioning of the two crank arm assemblies in the assembling step of the bottom bracket assembly.

The Applicant has observed that the solution described in EP 1792818 does not ensure the correct alignment of the crank arms in the case of errors or oversights in the production step of the shaft elements and/or in the mounting step of the crank arms on the respective shaft elements. Indeed, it is possible for example, in the absence of a clear visual indication on the tooth or on the throat used as reference element, for the operator to confuse such a tooth or throat with an adjacent tooth or throat and not to perfectly align the crank arm with the respective shaft element. In this case, it is still possible to couple together the two crank arm assemblies and only later realize that the crank arms are not correctly aligned.

US 5924336 discloses a shaft element of a bicycle bottom bracket assembly as recited in the preamble of claim 1.

The Applicant has therefore felt the need to identify a solution that makes it possible to achieve a high precision of alignment of the crank arms while reducing as much as possible, if not actually eliminating at all, any possibility of error by the operator.

The present invention therefore relates to a bicycle bottom bracket assembly as recited in claim 1.

Advantageously, thanks to the special features of the reference element, it facilitates the precise coupling of the crank arm with the shaft element and of the shaft element with the other shaft element.

Said single coupling position between said shaft element and said other shaft element is identified on said first end portion and on an end portion of the other shaft element having a shape matching the shape of said first end portion.

Preferably, said at least one reference element is visually distinguishable.

Indeed, the reference element is easily identifiable by the operator and cannot be confused with possible other identical elements. Therefore, the risk of having an incorrect alignment between the crank arm and the shaft element is extremely low. Consequently, thanks also to the fact that the reference element defines a single mutual coupling position of the shaft element with the other shaft element, it is impossible to couple the two shaft elements in a different position from the position which results in the correct alignment of the two crank arms.

In other words, an error-free assembling is obtained.

According to the invention, said first coupling means comprise:
- a plurality of first teeth that are identical to one another;
- a plurality of first throats that are identical to one another, each throat being arranged between two teeth of said plurality of first teeth;
- at least one second tooth different from said first teeth or at least one second throat different from said first throats;
wherein said at least one reference element is defined by said at least one second tooth or by said at least one second throat.

Preferably, said first teeth and said first throats belong to a front toothing.

Advantageously, the front toothing provides for precise references for carrying out subsequent operations on the shaft element, in particular for making the second coupling means and for defining the aforementioned coupling element.

Preferably, said front toothing is a Hirth toothing.

Advantageously, this type of toothing is simple to make and allows a high precision of alignment of the crank arms with respect to the teeth or throats of the toothing, as well as a high precision of centering with a matching toothing of the same type.

Preferably, said first teeth and said first throats have identical and matching profiles.

Advantageously, in this way the front toothing is made with standardized techniques and the two opposite shaft elements are substantially very similar, with a consequent optimization of the production process of the shaft elements.

Preferably, said at least one second tooth or said at least one second throat has a circumferential dimension substantially equal to the sum of the circumferential dimensions of two of said first teeth and one of said first throats or to the sum of the circumferential dimensions of two of said first throats and one of said first teeth, respectively.

Advantageously, the aforementioned second tooth can be made by simply omitting to make a throat during the forming of a front toothing on the entire circumference of the first end portion of the shaft element, whereas the aforementioned second throat can be made by simply removing, by a chip removal process, a tooth from a front toothing previously made on the entire circumference of the first end portion of the shaft element.

Preferably, said at least one second tooth or said at least one second throat has an axial dimension substantially equal to the axial dimension of said first teeth or to the axial dimension of said first throats, respectively.

More preferably, the axial dimension of said first teeth and of said at least one second tooth is substantially equal to the axial dimension of said first throats and of said at least one second throat, respectively.

In preferred embodiments of the shaft element of the present invention, said second coupling means comprise a grooved profile or a threading.

In both cases it is ensured that, when the crank arm is coupled with the shaft element, the predetermined angular positioning of the crank arm with respect to the reference element on the shaft element is obtained precisely. Furthermore, the shaft elements of the crank arm assemblies that form the bottom bracket assembly can be substantially identical and thus both obtained with analogous mechanical processes.

The preferred grooved profile comprises crests and grooves defined by joined curved surfaces, according the description of European patent application n° EP 1726518 to the same Applicant. This type of grooved profile is particularly advantageous in those cases in which it must be made on components having unidirectional structural fibers, like for example the matching grooved profile on a crank arm made of composite material to be associated with the shaft element, since the absence of sharp edges and deep grooves minimizes the possibility of breaking or damage of the aforementioned unidirectional structural fibers.

Preferably, the bottom bracket arm assembly comprises a crank arm comprising fourth coupling means having a shape matching the shape of said second coupling means and coupled with said second coupling means.

When assembling the crank arm assembly, the precise predetermined angular positioning between the crank arm and the shaft element described above is made much easier. Indeed, the crank arm is correctly oriented with respect to the coupling element defined on the shaft element, such a coupling element in turn having a predetermined angular position with respect to the reference element defined on the same shaft element.

In particular, when assembling the bottom bracket, the precise alignment of the crank arms is ensured.

Preferably, said first and second shaft elements are substantially identical apart from said at least one reference element.

More preferably, said at least one reference element of said first shaft element is defined by said at least one second tooth and said at least one reference element of said second shaft element is defined by said at least one second throat.

The first and second shaft elements can thus be obtained with analogous mechanical processes.

Preferably, said first and second shaft elements have the same length.

In this way, the first and second shaft elements have substantially the same thickness and, therefore, the same weight.

Further features and advantages of the present invention will become clearer from the following description of some preferred embodiments thereof, made hereinafter, for indicating and not limiting purposes, with reference to the attached drawings. In such drawings:
- figure 1 is a schematic longitudinal section view of a bottom bracket assembly comprising two shaft elements in accordance with a first preferred embodiment of the invention, wherein the bottom bracket assembly is housed in a housing seat provided on a bicycle frame;
- figure 2 is a schematic side view of a first shaft element used in the first preferred embodiment of the invention;
- figure 3 is a schematic front view of the first shaft element of figure 2;
- figure 4 is a schematic perspective view of the first shaft element of figure 2;
- figure 5 is a schematic side view of a second shaft element used in the first preferred embodiment of the invention;
- figure 6 is a schematic front view of the second shaft element of figure 5;
- figure 7 is a schematic perspective view of the second shaft element of figure 5;
- figure 8 is a schematic side view of the two shaft elements of figures 2 and 5 coupled together;
- figure 9 is a schematic perspective view of a variant of the shaft element of figures 2-4;
- figure 10 is a schematic perspective view of a variant of the shaft element of figures 5-7;
- figure 11 is a schematic longitudinal section view of a bottom bracket assembly comprising two shaft elements in accordance with a second preferred embodiment of the invention,
wherein the bottom bracket assembly is housed in a housing seat provided on a bicycle frame.

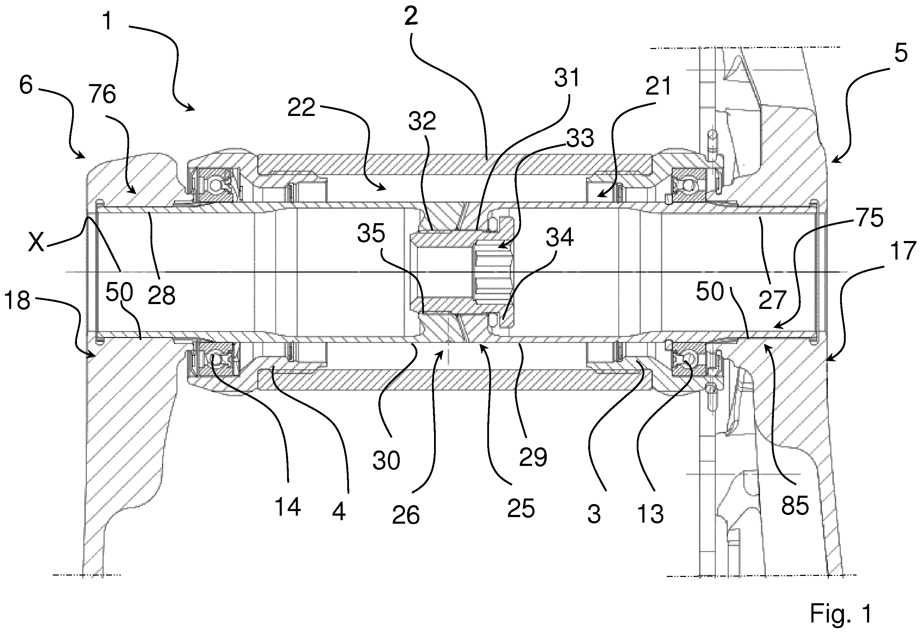

With initial reference to figures 1-10, reference numeral 1 globally indicates a first preferred embodiment of a bicycle bottom bracket assembly in accordance with the invention.

The bottom bracket assembly 1 essentially comprises two crank arm assemblies 5 and 6, each comprising a crank arm 17 and 18 and a hollow shaft element 21 or 22.

The crank arms 17 and 18 can be made of metal or of composite material.

The shaft elements 21 or 22 of the bottom bracket assembly 1 extend along a longitudinal axis X and are partially housed in a suitable tubular housing seat 2 formed in a frame of a bicycle and extending along the longitudinal axis X.

The shaft elements 21 or 22 are supported in rotation in the housing seat 2 about the longitudinal axis X through bearings 13, 14.

The bearings 13, 14 are operatively arranged between the shaft elements 21, 22 and respective adapter rings 3 and 4, screwed at opposite ends of the housing seat 2 and positioned outside of the housing seat 2.

The shaft elements 21, 22 are coupled with one another at respective first end portions 29, 30 through respective coupling means 25 and 26. The latter also allow precise centering between the shaft elements 21, 22.

The end portions 29, 30 of the shaft elements 21, 22 have a through hole 31 and a threaded hole 32, respectively, coaxial to the longitudinal axis X, for the insertion of a nut 33 configured to ensure the coupling between the shaft elements 21, 22 to be maintained. The nut 33 inserts into the through hole 31 and stops by going into abutment through a radial flange 34 thereof against an inner wall of the shaft element 21. The nut 33 has a threaded shank 35 that screws into the threaded hole 32.

In an alternative embodiment, both the shaft elements 21 and 22 have respective externally (or internally) threaded end portions 29, 30 and the stability of the coupling between the shaft elements 21, 22 can be ensured through the use of an internally (or externally) threaded bush which the threaded end portions 29, 30 of the shaft elements 21, 22 are screwed to.

Since the two crank arm assemblies 5, 6 differ essentially only in the type of crank arm 17, 18, which in the first case is a right crank arm and in the second case is a left crank arm, in the alignment between crank arm 17, 18 and respective shaft element 29, 30 and in the aforementioned end portion 29, 30 of the shaft elements, the detailed description of a crank arm assembly according to the invention will be made hereinafter with particular reference to the crank arm assembly 5 and can also be extended to the crank arm assembly 6, except where specifically indicated otherwise.

As already stated, the shaft element 21 of the crank arm assembly 5 extends along the longitudinal axis X and has, at the first end portion 29 thereof, the coupling means 25.

The coupling means 25 comprise a plurality of first teeth 38a that are identical to one another and a plurality of first throats 41a that are identical to one another, each first throat 41 being arranged between two first teeth 38a of the plurality of first teeth 38a.

The coupling means 25 further comprise a second tooth 38c different from the first teeth 38a.

Similarly, the coupling means 26 of the shaft element 22 comprise a plurality of first teeth 38b that are identical to one another and a plurality of first throats 41b that are identical to one another, each first throat 41 being arranged between two first teeth 38b of the plurality of first teeth 38b.

The coupling means 26 further comprise a second throat 41c different from the first throats 41b.

The first teeth 38a, 38b are identical to one another in shape and size. Similarly, the first throats 41a, 41b are identical to one another in shape and size.

The second tooth 38c is different in shape and/or size from the first teeth 38a, 38b.

The second throat 41c is different in shape and/or size from the first throats 41a, 41b.

The second tooth 38c defines in the shaft element 21 a reference element visually distinguishable with respect to the first teeth 38a.

The second throat 41c defines in the shaft element 22 a reference element visually distinguishable with respect to the first throats 41b.

The second tooth 38c and the second throat 41c define a single mutual coupling position between shaft element 21 and shaft element 22.

The second tooth 38c has a circumferential dimension substantially equal to the sum of the circumferential dimensions of two first teeth 38a and a first throat 41a.

The second throat 41c has a circumferential dimension substantially equal to the sum of the circumferential dimensions of two first throats 41b and a first tooth 38b.

The second tooth 38c has an axial dimension substantially equal to the axial dimension of the first teeth 38a.

The second throat 41c has an axial dimension substantially equal to the axial dimension of the first throats 41b.

The axial dimension of the first teeth 38a and of the second tooth 38c is substantially equal to the axial dimension of the first throats 41b and of the second throat 41c, respectively.

The first teeth 38a have an identical profile. Such a profile is identical to the profile of the first teeth 38b.

The first throats 41a have an identical profile. Such a profile is identical to he profile of the first throats 41b.

The first teeth 38a, 38b have a profile identical to and matching the profile of the first throats 41a, 41b.

The secondo tooth 38c has a profile identical to and matching the profile of the second throat 41c.

In the illustrated embodiment, the first teeth 38a, 38b and the first throats 41a, 41b belong to respective front toothings, preferably of the Hirth type.

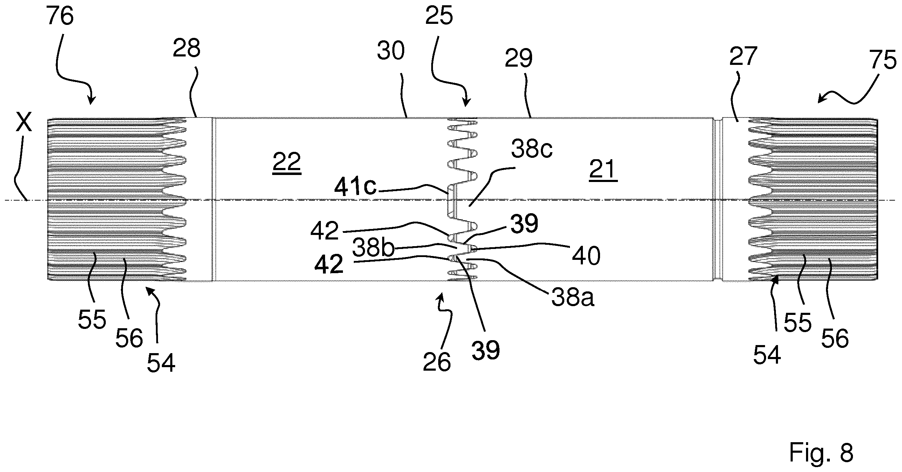

As shown in particular in figure 8, each of the first teeth 38a, 38b extends, symmetrically with respect to a respective middle plane, in the axial direction between a top surface 40 and two bottom surfaces 42 of the adjacent first throats 41a, 41b and is laterally delimited by two side surfaces 39. The top surfaces 40 of the first teeth 38a, 38b lie on an ideal cone having a vertex on the axis X. The bottom surfaces 42 of the first throats 41a, 41b also lie on an ideal cone, the latter having a concavity opposite to the concavity of the previous ideal cone, and having a vertex on the axis X as well.

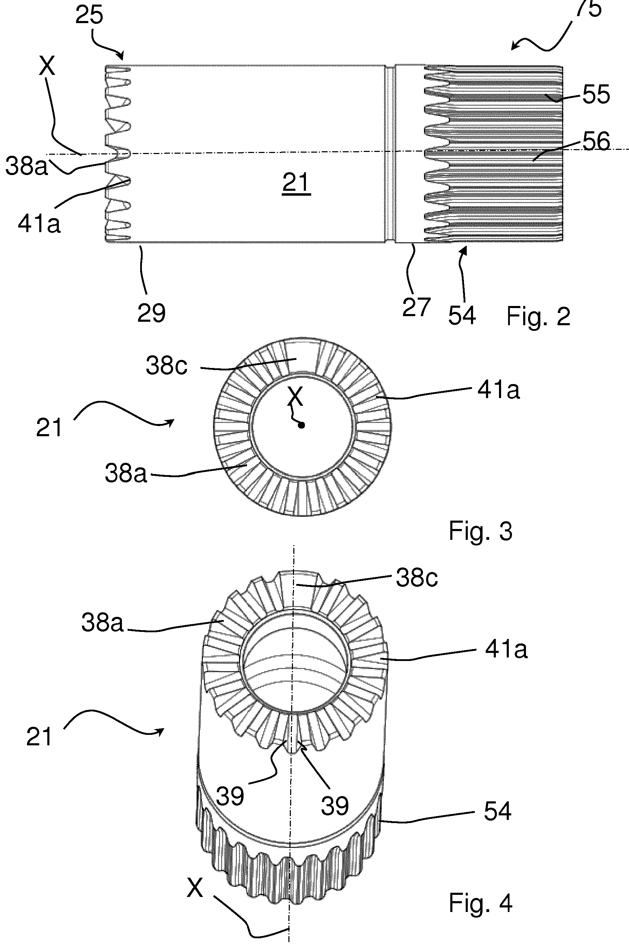

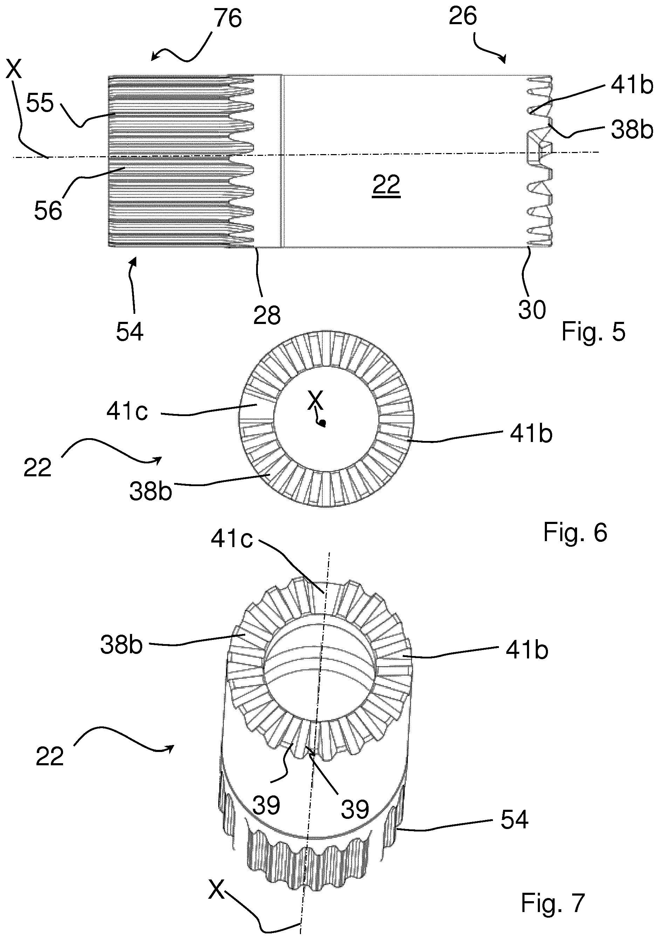

Furthermore, as shown in particular in figures 4 and 7, the side surfaces 39 of each first tooth 38a, 38b are inclined with respect to a middle plane of the respective tooth passing through the axis X, so as to form a wedge that is tapered both in the axial direction and in the radial direction. The tapering angle in the axial direction for a standard Hirth toothing is equal to about 60°. As a consequence of such geometry of the teeth 38a, 38b, a coupling with a Hirth toothing provides, in general, for a contact only between the side surfaces 39 of the teeth 38a, 38b. The coupling of all of the wedges of the front toothing of the shaft element 21 with those of the front toothing of the shaft element 22 ensures the centering of the two shaft elements 21, 22.

It is however possible to foresee embodiments in which the first teeth 38a, 38b have side surfaces 39 that are parallel to their middle plane, so as to allow a contact between the bottom surfaces 42 of the first throats 41a, 41b and the top surfaces 40 of the first teeth 38a, 38b. In this case, the centering takes place through the concavities of the aforementioned ideal cones.

The shaft elements 21 and 22 are substantially identical apart from the second tooth 38c and the second throat 41c.

The shaft elements 21 and 22 have the same length, i.e. the same axial extension.

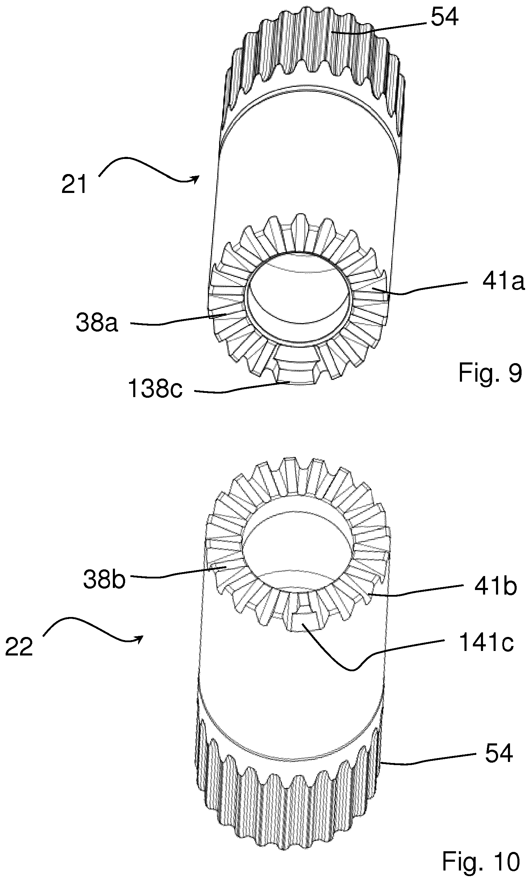

Figure 9 shows a variant of the shaft element 21 described above, in which elements that are structurally or functionally equivalent to those already described with reference to figures 2-4 are indicated with the same reference numeral.

In this variant, the reference element is defined by a second tooth 138c that has a radial extension shorter than that of the first teeth 38a.

Figure 10 shows a variant of the shaft element 22 described above, in which elements that are structurally or functionally equivalent to those already described with reference to figures 5-7 are indicated with the same reference numeral.

In this variant, the reference element is defined by a second throat 141c that has a radial extension shorter than that of the first throats 41b.

The second tooth 138c has a profile that is identical to and matching the profile of the second throat 141c.

In general, the reference elements defined in the shaft elements 21, 22 at the respective coupling means 25 and 26 can be of different number, shape and size from what is illustrated in the examples of figures 2-10.

In particular, it is possible to foresee types of coupling between the shaft element 21 and the shaft element 22 that are different from the type of coupling described above, provided that such a coupling defines a single mutual coupling position between the shaft element 21 and the shaft element 22 at the respective first end portions 29, 30.

For example, shape couplings through grooved profiles or threaded profiles can be foreseen.

In alternative embodiments to the one described above, instead of the shape coupling between the second tooth 38c, 138c and the second throat 41c, 141c, it is possible to foresee one or more crests and matching groove(s), one or more projections and matching recess(es), dovetail profiles, etc.

An embodiment is also foreseen in which the second tooth 38c and the second throat 41c are not necessarily visually distinguishable from the first teeth 38a and from the first throats 41b, respectively, because of a different shape or size. The reference element is in this case defined by a tooth 38a on which a magnetic film (or a film made of ferro-magnetic material) is applied, such a tooth being configured to couple with a throat 41b on which a magnetic film (or a film made of ferro-magnetic material) is applied.

In all of the embodiments described above, the shaft elements 21 and 22 have, at the respective opposite second end portions 27 and 28, coupling means 75 and 76 for coupling with the crank arms 17 and 18.

The coupling means 75 and 76 define a respective mounting middle plane of the crank arms 17 and 18.

The coupling means 75, 76 comprise coupling elements having a predetermined angular position with respect to the second tooth 38c and to the second throat 41c, in particular with respect to a middle plane of the second tooth 38c and of the second throat 41c.

In a first preferred embodiment of the invention (figures 1-10), the aforementioned coupling means 75, 76 comprise a grooved profile 54.

In particular, the coupling means 75 comprise crests 55 and grooves 56. Any crest 55 or any groove 56 can be used as a reference coupling element to align the crank arm 17.

The crank arm 17 has, at a free end thereof, a coupling seat 50, preferably comprising a through hole, for mounting the crank arm 17 on the shaft element 21. Coupling means 85 are defined at the coupling seat 50, the coupling means 85 having a shape matching the shape of the coupling means 75 of the shaft element 21 and comprising a matching coupling element having a predetermined angular position with respect to a middle plane of the crank arm 17 passing through the axis of the coupling seat 50.

In particular, in this preferred embodiment, the coupling means 85 of the crank arm 17 comprise a grooved profile matching the grooved profile 54, i.e. also provided with respective crests and grooves.

Although any grooved profile can be adopted, the grooved profile described in detail in European patent application n° EP 1726518 to the same Applicant is preferred. Such a grooved profile comprises crests and grooves defined exclusively by curved surfaces, in particular arcs of circumference, joined together.

As an example, the grooved profile 54 can comprise twenty-four crests 55 and the coupling means 25 can comprise eighteen first teeth 38a and one second tooth 38c.

The crank arm 17 has the middle plane aligned with a crest or a groove of the grooved profile. When the crank arm 17 is coupled with the shaft element 21 to form the crank arm assembly 5, the aforementioned crest or groove inserts into the groove 56 or crest 55 of the grooved profile 54 that is used as reference coupling element to align the crank arm 17.

In the crank arm assembly 6 (figure 1) the crank arm 18 is coupled with the shaft element 22 in the same way.

The second end portion 27, 28 of the shaft element 21, 22 can have an outer diameter substantially equal to the outer diameter of the respective first end portion 29 and 30. In particular, the crests 55 of the grooved profile 54 can have an outer diameter substantially equal to the outer diameter of the respective first end portion 29 and 30.

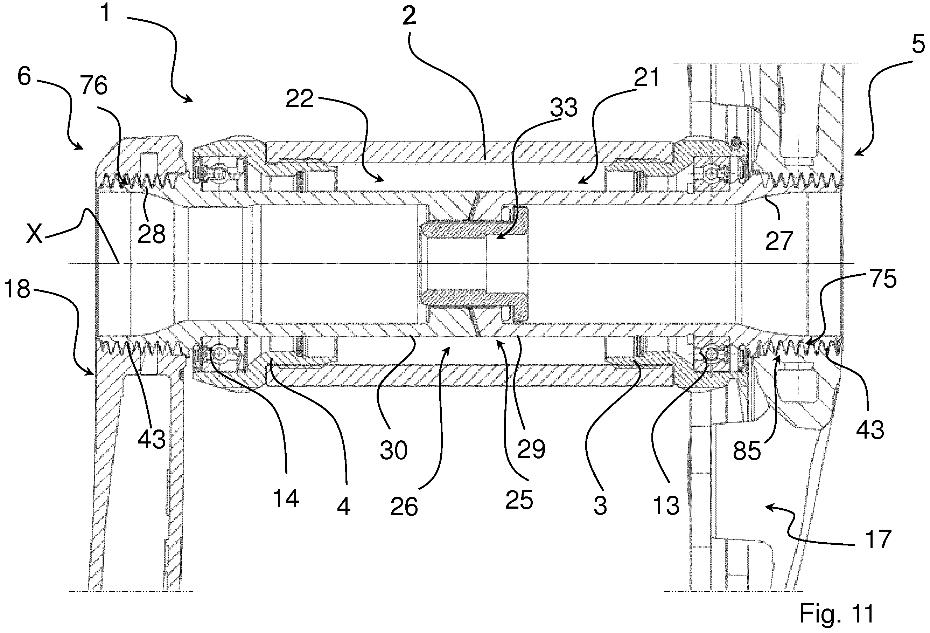

A second preferred embodiment of the invention is shown in figure 11, in which elements that are structurally or functionally equivalent to those already described with reference to the first embodiment are indicated with the same reference numeral.

In such an embodiment, the aforementioned coupling means 75, 76 comprise a threading 43.

The threading 43 is preferably a fine-pitch threading, for example having a pitch equal to 1.25 mm.

Preferably, the second end portion 27, 28 of the shaft element 21, 22 preferably has an increased outer diameter with respect to the outer diameter of the respective first end portion 29 and 30, so as to have a sufficiently large threaded surface also with a low number of threads.

The coupling means 85 of the crank arm 17 comprise a threading matching the threading 43.

The interface between the threading 43 on the shaft element 21 and the threading on the crank arm 17 is typically filled with adhesive material, to avoid possible unscrewing.

In general, the crank arm assemblies 5, 6 comprise locking means against the axial sliding of the crank arms 17, 18 with respect to the shaft elements 21, 22. Such locking means have a preferred use in the case in which the coupling is a shape coupling made, for example, through the grooved profiles described above, in order to substantially avoid the possibility of the crank arms 17, 18 coming out from the respective shaft elements 21, 22 during operation. The locking means can, however, be advantageously provided also in the case of other types of coupling, for example threaded couplings, in order to increase or make it more secure the axial locking of the crank arms on the respective shaft elements.

In general, the crank arms 17 and 18 referred to can be made both of metallic material, like aluminum alloys, and of composite material. In this last case the threaded or grooved couplings have proven to be sufficiently strong as not to require an insert in the crank arm.

The aforementioned composite material can comprise structural fibers incorporated in a polymeric material. Preferably, the structural fibers are selected from the group consisting of: carbon fibers, glass fibers, aramid fibers, ceramic fibers, boron fibers and combinations thereof, carbon fibers being preferred. Preferably, the polymeric material is a thermosetting material, but a thermoplastic material can be used as well. More preferably, the polymeric material comprises an epoxy resin.

The arrangement of the structural fibers in the polymeric material can be a random arrangement of pieces or sheets of structural fibers, a substantially unidirectional orderly arrangement of fibers, a substantially bi-directional orderly arrangement of fibers, or a combination thereof.

As far as the assembling of the bottom bracket assembly 1 according to the invention is concerned, the operator firstly assembles the crank arm assemblies 5, 6 by coupling each crank arm 17, 18 with the respective shaft element 21, 22.

The operator easily identifies the reference element defined at the coupling means 25 and 26 of the shaft element 21, 22 and couples the respective crank arm 17, 18 in the desired angular position. Such a coupling is carried out for example by press-fitting in the case in which the coupling between crank arms 17, 28 and shaft elements 21, 22 is a coupling through grooved profiles or through the assembly device described and illustrated in patent application EP 1792818 in the case in which the coupling between crank arms 17, 28 and shaft elements 21, 22 is a coupling through threaded profiles. Such a coupling brings the middle plane of the crank arm 17, 18 into a predetermined position (preferably aligned) with respect to the middle plane of the aforementioned reference element.

Thereafter, the operator couples the assembled crank arm assemblies 5, 6. Thanks to the fact that the reference element defines a single mutual coupling position of the shaft element 21 with the other shaft element 22, it is impossible to couple the two crank arm assemblies 5, 6 in a different position from that which entails the correct alignment of the two crank arms 17, 18.

Of course, in order to satisfy specific and contingent requirements those skilled in the art can bring numerous modifications and variants to the present invention, even so the scope of protection is defined by the following claims.

## Claims

1. Bicycle bottom bracket assembly (1), comprising a first shaft element (21, 22) and a second shaft element (22, 21), the first shaft element (21, 22) comprising a first end portion (29, 30) having first coupling means (25, 26) for coupling with the second shaft element (22, 21) and an opposite second end portion (27, 28) having second coupling means (75, 76) for coupling with a crank arm (17, 18), wherein said first coupling means (25, 26) comprise at least one reference element (38c, 41c, 138c, 141c) and said second coupling means (75, 76) comprise at least one coupling element (55, 56) having a predetermined angular position with respect to said at least one reference element (38c, 41c, 138c, 141c), wherein said at least one reference element (38c, 41c, 138c, 141c) defines a single mutual coupling position of said first shaft element (21, 22) with said second shaft element (22, 21), wherein the second shaft element (22, 21) has third coupling means (26, 25) having a shape matching the shape of said first coupling means (25, 26) and coupled with said first coupling means (25, 26), **characterized in that** said first coupling means (25, 26) comprise:
- a plurality of first teeth (38a, 38b) that are identical to one another;
- a plurality of first throats (41a, 41b) that are identical to one another, each throat (41a, 41b) being arranged between two teeth of said plurality of first teeth (38a, 38b);
- at least one second tooth (38c, 138c) different from said first teeth (38a, 38b) or at least one second throat (41c, 141c) different from said first throats (41a, 41b);
wherein said at least one reference element is defined by said at least one second tooth (38c, 138c) or by said at least one second throat (41c, 141c).

2. Bottom bracket assembly (1) according to claim 1, wherein said at least one reference element (38c, 41c, 138c, 141c) is visually distinguishable.

3. Bottom bracket assembly (1) according to claim 1 or 2, wherein said first teeth (38a, 38b) and said first throats (41a, 41b) belong to a front toothing.

4. Bottom bracket assembly (1) according to claim 3, wherein said front toothing is a Hirth toothing.

5. Bottom bracket assembly (1) according to any one of the previous claims, wherein said first teeth (38a, 38b) and said first throats (41a, 41b) have identical and matching profiles.

6. Bottom bracket assembly (1) according to any one of the previous claims, wherein said at least one second tooth (38c, 138c) or said at least one second throat (41c, 141c) has a circumferential dimension substantially equal to the sum of the circumferential dimensions of two of said first teeth (38a, 38b) and one of said first throats (41a, 41b) or to the sum of the circumferential dimensions of two of said first throats (41a, 41b) and one of said first teeth (38a, 38b), respectively.

7. Bottom bracket assembly (1) according to any one of the previous claims, wherein said at least one second tooth (38c, 138c) or said at least one second throat (41c, 141c) has an axial dimension substantially equal to the axial dimension of said first teeth (38a, 38b) or to the axial dimension of said first throats (41a, 41b), respectively.

8. Bottom bracket assembly (1) according to claim 7, wherein the axial dimension of said first teeth (38a, 38b) and of said at least one second tooth (38c, 138c) is substantially equal to the axial dimension of said first throats (41a, 41b) and of said at least one second throat (41c, 141c), respectively.

9. Bottom bracket assembly (1) according to any one of the previous claims, wherein said second coupling means (75, 76) comprise a grooved profile (54) or a threading (43).

10. Bottom bracket assembly (1) according to any one of the previous claims, wherein the crank arm comprises fourth coupling means (85) having a shape matching the shape of said second coupling means (75, 76) and coupled with said second coupling means (75, 76).

11. Bottom bracket assembly (1) according to any of the previous claims, wherein said first and second shaft elements (21, 22) are substantially identical apart from said at least one reference element (38c, 41c, 138c, 141c).

12. Bottom bracket assembly (1) according to claim 11, wherein said at least one reference element of said first shaft element (21) is defined by said at least one second tooth (38c, 138c) and said at least one reference element of said second shaft element (22) is defined by said at least one second throat (41c, 141c).

13. Bottom bracket assembly according to any one of claims 11 to 12, wherein said first and second shaft elements (21, 22) have the same length.

## Patentansprüche

1. Fahrradtretlageranordnung (1), umfassend ein erstes Wellenelement (21, 22) und ein zweites Wellenelement (22, 21), wobei das erste Wellenelement (21, 22) einen ersten Endabschnitt (29, 30) mit einer ersten Kopplungseinrichtung (25, 26) zum Koppeln mit dem zweiten Wellenelement (22, 21) und einem gegenüberliegenden zweiten Endabschnitt (27, 28) mit einer zweiten Kopplungseinrichtung (75, 76) zum Koppeln mit einem Kurbelarm (17, 18) umfasst, wobei die erste Kopplungseinrichtung (25, 26) wenigstens ein Referenzelement (38c, 41c, 138c, 141c) umfasst und die zweite Kopplungseinrichtung (75, 76) wenigstens ein Kopplungselement (55, 56) aufweist, das eine vorbestimmte Winkelposition in Bezug auf das wenigstens eine Referenzelement (38c, 41c, 138c, 141c) hat, wobei das wenigstens eine Referenzelement (38c, 41c, 138c, 141c) eine einzelne wechselseitige Kopplungsposition des ersten Wellenelements (21, 22) mit dem zweiten Wellenelement (22, 21) definiert, wobei das zweite Wellenelement (22, 21) eine dritte Kopplungseinrichtung (26, 25) mit einer Form aufweist, die zu der Form der ersten Kopplungseinrichtung (25, 26) passt und mit der ersten Kopplungseinrichtung (25, 26) gekoppelt ist, **dadurch gekennzeichnet, dass** die erste Kopplungseinrichtung (25, 26) umfasst:
- eine Vielzahl von ersten Zähnen (38a, 38b), die zueinander identisch sind;
- eine Vielzahl erster Kerben (41a, 41b), die zueinander identisch sind, wobei jede Kerbe (41a, 41b) zwischen zwei Zähnen der Vielzahl erster Zähne (38a, 38b) angeordnet ist;
- wenigstens einen zweiten Zahn (38c, 138c), der sich von den ersten Zähnen (38a, 38b) unterscheidet, oder wenigstens eine zweite Kerbe (41c, 141c), die sich von den ersten Kerben (41a, 41b) unterscheidet;
wobei das wenigstens eine Referenzelement durch den wenigstens einen zweiten Zahn (38c, 138c) oder durch die wenigstens eine zweite Kerbe (41c, 141c) definiert ist.

2. Tretlageranordnung (1) nach Anspruch 1, bei der das wenigstens eine Referenzelement (38c, 41c, 138c, 141c) visuell unterscheidbar ist.

3. Tretlageranordnung (1) nach Anspruch 1 oder 2, bei der die ersten Zähne (38a, 38b) und die ersten Kerben (41a, 41b) zu einer vorderen Verzahnung gehören.

4. Tretlageranordnung (1) nach Anspruch 3, bei der die vordere Verzahnung eine Hirth-Verzahnung ist.

5. Tretlageranordnung (1) nach einem der vorhergehenden Ansprüche, bei der die ersten Zähne (38a, 38b) und die ersten Kerben (41a, 41b) identische und übereinstimmende Profile aufweisen.

6. Tretlageranordnung (1) nach einem der vorhergehenden Ansprüche, bei der der wenigstens eine zweite Zahn (38c, 138c) oder die wenigstens eine zweite Kerbe (41c, 141c) eine Umfangsabmessung aufweist, die im wesentlichen gleich der Summe der Umfangsabmessungen zweier der ersten Zähne (38a, 38b) und einer der ersten Kerben (41a, 41b) oder der Summe der Umfangsabmessungen zweier der ersten Kerben (41a, 41b) und eines der ersten Zähne (38a, 38b) ist.

7. Tretlageranordnung (1) nach einem der vorhergehenden Ansprüche, bei der der wenigstens eine zweite Zahn (38c, 138c) oder die wenigstens eine zweite Kerbe (41c, 141c) eine axiale Abmessung aufweist, die im wesentlichen gleich der axialen Abmessung der ersten Zähne (38a, 38b) bzw. der axialen Abmessung der ersten Kerben (41a, 41b) ist.

8. Tretlageranordnung (1) nach Anspruch 7, bei der die axiale Abmessung der ersten Zähne (38a, 38b) und des wenigstens einen zweiten Zahns (38c, 138c) im wesentlichen gleich der axialen Abmessung der ersten Kerben (41a, 41b) bzw. der wenigstens einen zweiten Kerbe (41c, 141c) ist.

9. Tretlageranordnung (1) nach einem der vorhergehenden Ansprüche, bei der die zweite Kopplungseinrichtung (75, 76) ein gerilltes Profil (54) oder ein Gewinde (43) umfasst.

10. Tretlageranordnung (1) nach einem der vorhergehenden Ansprüche, bei der der Kurbelarm eine vierte Kopplungseinrichtung (85) mit einer Form aufweist, die der Form der zweiten Kopplungseinrichtung (75, 76) entspricht und mit der zweiten Kopplungseinrichtung (75, 76) gekoppelt ist.

11. Tretlageranordnung (1) nach einem der vorhergehenden Ansprüche, bei der das erste und das zweite Wellenelement (21, 22) abgesehen von dem wenigstens einen Referenzelement (38c, 41c, 138c, 141c) im wesentlichen identisch sind.

12. Tretlageranordnung (1) nach Anspruch 11, bei der das wenigstens eine Referenzelement des ersten Wellenelements (21) durch den wenigstens einen zweiten Zahn (38c, 138c) definiert ist und das wenigstens eine Referenzelement des zweiten Wellenelementes (22) durch die wenigstens eine zweite Kerbe (41c, 141c) definiert ist.

13. Tretlageranordnung nach einem der Ansprüche 11 bis 12, bei der das erste und das zweite Wellenelement (21, 22) die gleiche Länge haben.

## Revendications

1. Assemblage de pédalier de bicyclette (1), comprenant un premier élément d'arbre (21, 22) et un second élément d'arbre (22, 21), le premier élément d'arbre (21, 22) comprenant une première partie d'extrémité (29, 30) qui comporte un premier moyen de couplage (25, 26) pour un couplage avec le second élément d'arbre (22, 21) et une seconde partie d'extrémité opposée (27, 28) qui comporte un deuxième moyen de couplage (75, 76) pour un couplage avec un bras de manivelle (17, 18), dans lequel ledit premier moyen de couplage (25, 26) comprend au moins un élément de référence (38c, 41c, 138c, 141c) et ledit deuxième moyen de couplage (75, 76) comprend au moins un élément de couplage (55, 56) qui présente une position angulaire prédéterminée par rapport audit au moins un élément de référence (38c, 41c, 138c, 141c), dans lequel ledit au moins un élément de référence (38c, 41c, 138c, 141c) définit une unique position de couplage mutuel dudit premier élément d'arbre (21, 22) avec ledit second élément d'arbre (22, 21), dans lequel le second élément d'arbre (22, 21) comporte un troisième moyen de couplage (26, 25) qui présente une forme qui correspond à la forme dudit premier moyen de couplage (25, 26) et qui est couplé avec ledit premier moyen de couplage (25, 26), **caractérisé en ce que** ledit premier moyen de couplage (25, 26) comprend :
- une pluralité de premières dents (38a, 38b) qui sont identiques les unes aux autres ;
- une pluralité de premières gorges (41a, 41b) qui sont identiques les unes aux autres, chaque gorge (41a, 41b) étant agencée entre deux dents de ladite pluralité de premières dents (38a, 38b) ;
- au moins une seconde dent (38c, 138c) qui est différente desdites premières dents (38a, 38b) ou au moins une seconde gorge (41c, 141c) qui est différente desdites premières gorges (41a, 41b) ;
dans lequel ledit au moins un élément de référence est défini par ladite au moins une seconde dent (38c, 138c) ou par ladite au moins une seconde gorge (41c, 141c).

2. Ensemble de pédalier de bicyclette (1) selon la revendication 1, dans lequel ledit au moins un élément de référence (38c, 41c, 138c, 141c) peut être distingué visuellement.

3. Ensemble de pédalier de bicyclette (1) selon la revendication 1 ou 2, dans lequel lesdites premières dents (38a, 38b) et lesdites premières gorges (41a, 41b) appartiennent à une denture avant.

4. Ensemble de pédalier de bicyclette (1) selon la revendication 3, dans lequel ladite denture avant est une denture de Hirth.

5. Ensemble de pédalier de bicyclette (1) selon l'une quelconque des revendications précédentes, dans lequel lesdites premières dents (38a, 38b) et lesdites premières gorges (41a, 41b) présentent des profils identiques et en correspondance.

6. Ensemble de pédalier de bicyclette (1) selon l'une quelconque des revendications précédentes, dans lequel ladite au moins une seconde dent (38c, 138c) ou ladite au moins une seconde gorge (41c, 141c) présente une dimension circonférentielle qui est respectivement sensiblement égale à la somme des dimensions circonférentielles de deux desdites premières dents (38a, 38b) et de l'une desdites premières gorges (41a, 41b) ou à la somme des dimensions circonférentielles de deux desdites premières gorges (41a, 41b) et de l'une desdites premières dents (38a, 38b).

7. Ensemble de pédalier de bicyclette (1) selon l'une quelconque des revendications précédentes, dans lequel ladite au moins une seconde dent (38c, 138c) ou ladite au moins une seconde gorge (41c, 141c) présente une dimension axiale qui est respectivement sensiblement égale à la dimension axiale desdites premières dents (38a, 38b) ou à la dimension axiale desdites premières gorges (41a, 41b).

8. Ensemble de pédalier de bicyclette (1) selon la revendication 7, dans lequel la dimension axiale desdites premières dents (38a, 38b) et de ladite au moins une seconde dent (38c, 138c) est respectivement sensiblement égale à la dimension axiale desdites premières gorges (41a, 41b) et de ladite au moins une seconde gorge (41c, 141c).

9. Ensemble de pédalier de bicyclette (1) selon l'une quelconque des revendications précédentes, dans lequel ledit deuxième moyen de couplage (75, 76) comprend un profil rainuré (54) ou un filetage (43).

10. Ensemble de pédalier de bicyclette (1) selon l'une quelconque des revendications précédentes, dans lequel le bras de manivelle comprend un quatrième moyen de couplage (85) qui présente une forme qui correspond à la forme dudit deuxième moyen de couplage (75, 76) et qui est couplé avec ledit deuxième moyen de couplage (75, 76).

11. Ensemble de pédalier de bicyclette (1) selon l'une quelconque des revendications précédentes, dans lequel lesdits premier et second éléments d'arbre (21, 22) sont sensiblement identiques hormis ledit au moins un élément de référence (38c, 41c, 138c, 141c).

12. Ensemble de pédalier de bicyclette (1) selon la revendication 11, dans lequel ledit au moins un élément de référence dudit premier élément d'arbre (21) est défini par ladite au moins une seconde dent (38c, 138c) et ledit au moins un élément de référence dudit second élément d'arbre (22) est défini par ladite au moins une seconde gorge (41c, 141c).

13. Ensemble de pédalier de bicyclette (1) selon l'une quelconque des revendications 11 et 12, dans lequel lesdits premier et second éléments d'arbre (21, 22) présentent la même longueur.
